(19) Europäisches Patentamt

European Patent Office

Office européen des brevets

(11) **EP 1 258 796 A2**

(12) **EUROPEAN PATENT APPLICATION**

(43) Date of publication:
**20.11.2002 Bulletin 2002/47**

(51) Int Cl.⁷: **G06F 1/00**

(21) Application number: **02253124.8**

(22) Date of filing: **02.05.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **08.05.2001 US 851474**

(71) Applicant: **Guzik Technical Enterprises**
**Mountain View, California 94043 (US)**

(72) Inventor: **Kouziminov, Timofei**
**Palo Alto, California 94306 (US)**

(74) Representative: **Cohen, Laurence J.**
**McDermott, Will & Emery**
**7 Bishopsgate**
**London EC2N 3AQ (GB)**

(54) **Copy protection method and system for a field-programmable gate array**

(57)  A copy protection system for a field programmable gate array includes a factory-programmed logic device (CPLD) including an initial state generator, a first sequence generator and an encryption device and a field-programmable gate array device (FPGA) being programmed with a field-programmable gate array program and including a second sequence generator, a third sequence generator, a decryption device and a sequence comparison device, the second sequence generator being a replicate of the first sequence generator. The CPLD generates an initial state in the initial state generator, initializes the first sequence generator with the initial state, encrypts the initial state in the encryption device, and transmits the encrypted initial state to the FPGA. The FPGA decrypts the encrypted initial state in the decryption device, initializes the second sequence generator with the initial state, generates a challenge sequence with the third sequence generator, transmits the challenge sequence to the first sequence generator and the second sequence generator. The first sequence generator generates a first reply sequence based on the initial state and the challenge sequence and transmits the first reply sequence to the sequence comparison device, and the second sequence generator generates a second reply sequence based on the initial state and the challenge sequence and transmits the second reply sequence to the sequence comparison device, which compares the first and second reply sequences and enables operation of the FPGA program when the first and second reply sequences arc identical.

FIG. 1

**Description**

Field of the Invention

The present invention relates generally to a method of and system for copy protecting a program resident in a field-programmable gate array and more particularly to a field-programmable gate array system which includes a programmable logic device for preventing copying of a field programmable gate array program stored in the field programmable gate array. The system also includes a licensing mechanism which enables the owner of the field-programmable gate array program to require users of the program to obtain a license before becoming authorized to use the program.

Background of the Invention

A device using programmable logic may contain one or several field-programmable gate array (FPGA) devices. A FPGA is an integrated circuit that can be programmed in the field after manufacture with programs for FPGA devices which determine their functionality. These programs can be loaded into the FPGA device in the process of normal device functioning. FPGA devices are standard components and circuits using them are usually simple from a hardware point of view. The principal intellectual property associated with these devices resides in the FPGA programs. These programs are usually supplied to customers in the form of files, which can be loaded into the hardware of the FPGA by the appropriate software. FPGA programs are essentially software (sometimes called *firmware*) which is relatively easy to copy. It is also relatively easy to replicate the FPGA device itself if no special measures are taken.

There are several methods and systems for protecting a programmed FPGA from being copied. One system involves programming sensitive parts of the design into a factory-programmed logic device (CPLD). Most CPLD's provide a so-called "security bit" which disables read-back of CPLD programs. It is generally believed that reverse engineering of a programmed CPLD is much harder than reverse engineering of a FPGA program. Other parts of the design are kept in the FPGA's that communicate with the CPLD during operation. However, this system contradicts the flexibility of FPGA-based devices. The parts of the design that are kept in the CPLD cannot be changed, thus reducing the options to upgrade the device or to use it for different tasks.

Alternatively, instead of keeping significant parts of a design in a CPLD it is possible to use the CPLD as storage for an activation code value. Upon activation, the FPGA reads this value from the CPLD and checks it for correctness. If the activation code is wrong, the FPGA does not function. However, retrieving an activation key from a CPLD is a one-time transaction. It can be recorded using a logic analyzer and a CPLD containing exactly the same activation key may be produced.

Sometimes obfuscation techniques are used to obstruct reverse engineering and duplication of a device. These techniques include grinding labels off of FPGA devices in order to conceal the fact that they are programmable, hiding some components beneath others, encapsulating the whole device in epoxy etc. However, no obfuscation technique will withstand a determined attack. After all device components are desoldered, it is possible to determine their parameters. All hidden chips can also be made visible.

There are also systems which prevent access to the FPGA programs themselves. These programs may be stored not as software-readable files, but as contents of a Programmable Read Only Memory (PROM) included into the device itself. If this technique is used, one needs to retrieve the program from the PROM in order to program it into a replica of the device. However, if the connections of the PROM chip are reachable with a logic analyzer, then the FPGA programs may be retrieved from the PROM when they are downloaded to the FPGA's. Thus the advantage of this method over the storing of the FPGA programs in software-readable files exists only if some obfuscation technique is used. Furthermore, when the FPGA programs are stored in a PROM, the process of upgrading them on the user's site becomes much more complicated than in the case when these programs are stored in files.

Unauthorized use of a FPGA device also may be prevented by software controlling the device in a way software copy protection usually works. Copy-protected software usually requires a license, which is a special portion of data that is issued by software manufacturer. This data is checked against the serial number of the device controlled by software using some cryptographic method (e.g. a hash function). If the license and device serial number do not match, the software does not work. To prevent forging of licenses via reverse engineering of software, which is considered relatively simple, special hardware copy protection keys are used. Such keys store a secret value needed to perform the license checking or implement the license-checking algorithm itself. The main disadvantage of any software-licensing scheme is that it can be bypassed by disassembling and patching the software. This is far easier than reverse engineering of FPGA programs.

Summary of the Invention

The present invention is directed to a system for preventing copying of a FPGA program from a FPGA device. The system includes a programmable logic device which generates an initial state, encrypts the initial state and transmits the encrypted initial state to the FPGA device. The FPGA device generates a challenge sequence which is input to a reply sequence generator in the FPGA which has been initialized with the initial state and to a reply sequence generator in the programmable logic device which has been initialized with the initial state. The reply sequence generators generate a reply sequence based on the initial state and the challenge sequence and output the reply sequence to a sequence comparison device in the FPGA, which compares the sequences to determine if they are identical. If they are, operation of the FPGA is enabled.

According to one aspect of the invention, a copy protection system for a field programmable gate array includes a factory-programmed logic device (CPLD) including an initial state generator, a first sequence generator and an encryption device and a field-programmable gate array device (FPGA) being programmed with a field-programmable gate array program and including a second sequence generator, a third sequence generator, a decryption device and a sequence comparison device, the second sequence generator being a replicate of the first sequence generator. The CPLD generates an initial state in the initial state generator, initializes the first sequence generator with the initial state, encrypts the initial state in the encryption device, and transmits the encrypted initial state to the FPGA. The FPGA decrypts the encrypted initial state in the decryption device, initializes the second sequence generator with the initial state, generates a challenge sequence with the third sequence generator, transmits the challenge sequence to the first sequence generator and the second sequence generator. The first sequence generator generates a first reply sequence based on the initial state and the challenge sequence and transmits the first reply sequence to the sequence comparison device, and the second sequence generator generates a second reply sequence based on the initial state and the challenge sequence and transmits the second reply sequence to the sequence comparison device, which compares the first and second reply sequences and enables operation of the FPGA when the first and second reply sequences are identical.

The initial state may be encrypted a second time in the encryption device before transmission to the decryption device. The first encryption operation may be carried out with a first key $k_0$, the second encryption operation may be carried out with a second key $k_1$ and the decryption operation may be carried out with a third key $k_2$ such that:

$$x_0 = k_2{}^{-1}(k_1(k_0(x_0)));$$

wherein $x_0$ is the initial state. The second key $k_1$ may operate as a license which enables authorized licensees of the FPGA program to use the FPGA program.

According to another aspect of the invention, a copy protection system for a field programmable gate array includes a factory-programmed logic device (CPLD) including an initial state generator, a first sequence generator and an encryption device; and a field-programmable gate array device (FPGA) being programmed with a field-programmable gate array program and including a second sequence generator, a decryption device and a sequence comparison device, the second sequence generator being a replicate of the first sequence generator. The CPLD generates an initial state in the initial state generator, initializes the first sequence generator with the initial state, encrypts the initial state in the encryption device, and transmits the encrypted initial state to the FPGA. The FPGA decrypts the encrypted initial state in the decryption device, and initializes the second sequence generator with the initial state. The first sequence generator generates a first sequence based on the initial state and transmits the first sequence to the sequence comparison device, and the second sequence generator generates a second sequence based on the initial state and transmits the second reply sequence to the sequence comparison device, which compares the first and second sequences and enables operation of the FPGA program when the first and second sequences are identical.

The FPGA may further include a third sequence generator which generates a challenge sequence, transmits the challenge sequence to the first sequence generator and the second sequence generator. The first sequence generator may generate a first reply sequence based on the initial state and the challenge sequence and transmits the first reply sequence to the sequence comparison device, and the second sequence generator generates a second reply sequence based on the initial state and the challenge sequence and transmits the second reply sequence to the sequence comparison device, which compares the first and second reply sequences and enables operation of the FPGA program when the first and second reply sequences are identical. The initial state may be encrypted a second time in the encryption device before transmission to the decryption device. The first encryption operation may be carried out with a first key $k_0$, the second encryption is carried out with a second key $k_1$ and the decryption is carried out with a third key $k_2$ such that:

$$x_0 = k_2{}^{-1}(k_1(k_0(x_0)));$$

wherein $x_0$ is the initial state. The second key $k_1$ may operate as a license which enables authorized licensees of the FPGA program to use the FPGA program.

According to yet another aspect of the invention, a method of copy protecting a field-programmable gate array includes:

    A. generating an initial state in a random bit generator of a programmable logic device;
    B. inputting the initial state into a first sequence generator of the programmable logic device;
    C. encrypting the initial state;
    D. transmitting the encrypted initial state from the programmable logic device to the field-programmable gate array;

E. decrypting the initial state in the field-programmable gate array;

F. inputting the initial state into a second sequence generator of the field-programmable gate array;

G. generating a first sequence with the first sequence generator based on the initial state;

H. generating a second sequence in the second sequence generator based on the initial state;

I. comparing the first sequence to the second sequence; and

J. terminating operation of the field-programmable gate array if the first sequence is not identical to the second sequence.

The method may further include:

K. generating a third sequence in a third sequence generator of the field-programmable gate array; and

L. inputting the third sequence into the first sequence generator and the second sequence generator;

wherein the first and second sequences are generated based on both the initial state and the third sequence. Step C may include encrypting the initial state with a first key $k_0$. The method may further include encrypting the initial state with a second key $k_1$ after step C. Step E may include decrypting the initial state with a third key $k_2$, such that:

$$x_0 = k_2^{-1}(k_1(k_0(x_0)));$$

wherein $x_0$ is the initial state. The second key $k_1$ may operate as a license which enables authorized licensees of the FPGA program to use the FPGA program.

Brief Description Of The Drawings

The foregoing and other objects of this invention, the various features thereof, as well as the invention itself may be more fully understood from the following description when read together with the accompanying drawings in which:

Fig. 1 is a schematic block diagram of the FPGA copy protection system in accordance with the present invention;

Fig. 2 is a flow diagram of the method for protecting a FPGA from copying in accordance with the present invention; and

Fig. 3 is a schematic block diagram of a multiple-FPGA copy protection system in accordance with the present invention.

Detailed Description

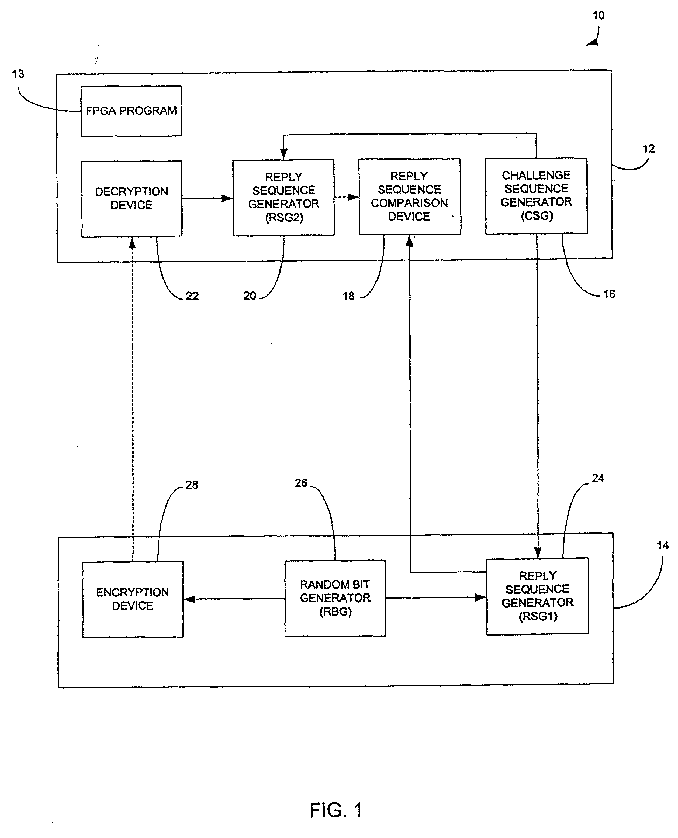

Figure 1 is a schematic block diagram of the FPGA copy protection system 10 of the present invention. The system includes a field-programmable gate array device (FPGA) 12 and a programmable logic device (CPLD) 14. In this example, only one FPGA is shown, however, it will be understood that a plurality of FPGA devices 14 may be included in the associated logic device, and a description of a system for copy-protecting multiple FPGA devices is described below.

FPGA 12 includes, among the devices (not shown) required to carry out the function programmed therein with the FPGA program 13, a challenge sequence generator (CSG) 16, a reply sequence comparison device 18, a reply sequence generator (RSG2) 20 and a decryption device 22. CPLD 14 includes a reply sequence generator (RSG1) 24, a random bit generator (RGB) 26 and an encryption device 28.

In the preferred embodiment, challenge sequence generator CSG 16 includes a linear feedback shift register which outputs a different sequence each time it is reset. Reply sequence generators RSG1 24 and RSG2 20 are identical, and operate to generate, in a cryptographically secure way, a reply sequence based on an initial state of the generators and the challenge sequence generated by the challenge sequence generator CSG 16. Preferably, RSG1 24 and RSG2 20 are block ciphers operating in ciphertext feedback mode. The operation of the block cipher is discussed in greater detail below. Random bit generator RBG 26 is preferably a "nearly genuine" random bit generator including a D flip-flop having its D input coupled to a high-frequency oscillator and its clock input coupled to a low frequency clock. As is described in detail below, the output of the RBG 26 is the initial state signal used to initialize reply sequence generators 20 and 24.

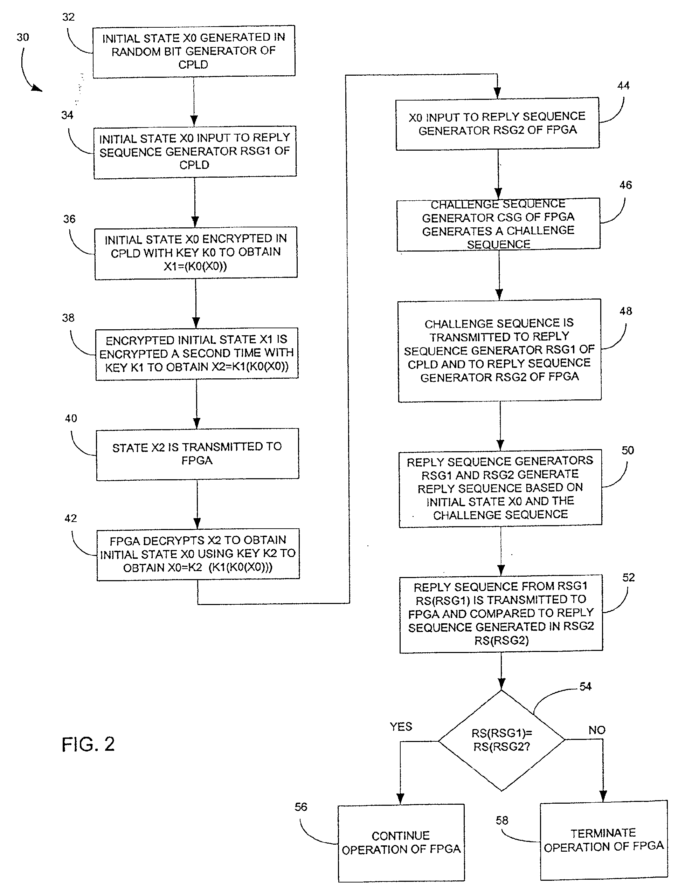

The operation of the system 10 will now be described with reference to Fig. 2, which shows a flow diagram 30 of the method for copy protecting the FPGA 12. This method is carried out whenever operation of the programmed FPGA 12 is to be enabled. As described below, the FPGA 12 and CPLD 14 continuously conduct a bi-directional activation protocol, in which the FPGA continuously outputs a challenge sequence to the CPLD 14, which replies with a reply sequence to the FPGA 12. FPGA 12 checks the reply sequence to ensure that it is the correct sequence, based on the initial state of the CPLD and the challenge sequence. As long as the FPGA determines that the reply sequence is correct, operation of the FPGA is allowed to continue. If the FPGA determines that the reply sequence is not correct, it terminates operation of the FPGA 14. However, prior to this bi-directional activation protocol, the initial state of the CPLD must be set. The method of generating the initial state and checking the resulting reply sequence is shown in Fig. 2.

In initial step 32, an initial state $x_0$ is generated

in random bit generator 26. As set forth above, the initial state $x_0$ is generated by random bit generator 26 by sampling the output of a high-frequency oscillator with a low frequency clock. The resulting output of the D flip-flop is accumulated in a register. When the register is full, its contents are used as the initial state $x_0$. The initial state $x_0$ is input to reply sequence generator RSG1 24 to initialize RSG1 24, step 34, and it is input to encryption device 28. Since the initial state $x_0$ must be transmitted to FPGA 12 to initialize RSG2 20, it must be encrypted prior to the transmission to prevent interception of the initial state. In one embodiment, only one encryption stage is carried out before the initial state is transmitted to the FPGA. However, in order to enable the system to require a license for operating the FPGA program, a second encryption stage is also carried out by software that controls the device. In step 36, the initial state $x_0$ is encrypted with a key $k_0$ to obtain the encrypted initial state $x_1$ according to the function:

$$x_1 = k_0(x_0). \qquad \text{Eq. (1)}$$

Encrypted initial state $x_1$ is then encrypted by software using a key $k_1$, step 38, to obtain encrypted initial state $x_2$ according to the function:

$$x_2 = k_1(k_0(x_0)). \qquad \text{Eq. (2)}$$

Encrypted initial state $x_2$ is then transmitted to decryption device 22 of FPGA 12, step 40. In Fig. 1, encrypted transmissions are shown in dashed lines while non-encrypted transmissions are shown in solid lines. Decryption device 22 decrypts encrypted initial state $x_2$, step 42, to obtain the unencrypted initial state $x_0$ according to the function:

$$x_0 = k_2^{-1}(k_1(k_0(x_0))). \qquad \text{Eq. (3)}$$

It will be understood that any type of encryption algorithm may be used to encrypt/decrypt the initial state, as long as the algorithm operates according to the equations 1-3 above. It will also be understood that decryption device 22 and encryption device 28 may be any type of firmware programs that are capable of carrying out the encryption/decryption detailed above. The encryption described above may be either public-key encryption or private-key encryption.

The decrypted initial state $x_0$ is then input to RSG2 20 to initialize RSG2 20, step 44. Once reply sequence generators RSG1 24 and RSG2 20 have been initialized with the initial state $x_0$, the challenge sequence generator CSG 16 generates the challenge sequence, step 46. Challenge sequence generator CSG 16 is preferably a linear feedback shift register which continuously outputs a random sequence. This random challenge sequence is output from the challenge sequence generator 16 to reply sequence generator RSG1 24 and to reply sequence generator RSG2 20, step 48.

In response to receiving the initial state $x_0$ and the challenge sequence, reply sequence generators RSG1 24 and RSG2 20 each generate a reply sequence, step 50. Since, if the system 10 has not been tampered with, the initial state $x_0$ and the challenge sequence input to the reply sequence generators RSG1 24 and RSG2 20 are identical, the reply sequences generated by each of the reply sequence generators RSG1 24 and RSG2 20 will be identical. The reply sequence generated in RSG1 24 must be transmitted back to the FPGA 12. Accordingly, it must be cryptographically strong. This means that, even if the reply sequence were to be intercepted as it is transmitted to the FPGA, it would be impossible to replicate the initial state of the reply sequence generator RSG1 24. Since the initial state of both of the reply sequence generators RSG1 and RSG2 cannot be recovered, the interception of the reply sequence from RSG1 24 will not enable a potential copier to replicate the reply sequence generated in RSG2 20.

As set forth above, the reply sequence generators 20 and 24 are preferably block ciphers configured to operate in ciphertext feedback mode. In such a sequence generator, the initial state $x_0$ is treated as a cryptographic key.

Let $n$ be the block length of the block cipher $E_x$. The challenge sequence is divided into $r$-bit blocks $m_i$, $i = 0, 1, \ldots$. The reply sequence is $v_0, c_0, c_1, \ldots$, where $v_0$ is a random $n$-bit initialization vector and $r$-bit blocks $c_i$ are obtained as follows:

$$t_i = E_x(v_i);$$

$$c_i = m_i \oplus t_i[0 : r\text{-}1]$$

$r$ leftmost bits of $t_i$ are used,
$\oplus$ is the bitwise addition modulo 2; and

$$v_{i+1} = v_i[r : n\text{-}1] \| c_i$$

$n$-bit $v_i$ is shifted $r$ bits to the left
and the rightmost $r$ bits are filled with $c_i$.
The reply sequences generated in RSG1 24 (RS(RSG1)) and RSG2 20 (RS(RSG2)) are then transmitted to reply sequence comparison device 18, step 52, and compared to each other to check for correctness of the reply sequence generated by the RSG1 24. If the reply sequence RS(RSG1) is identical to reply sequence RS(RSG2), step 54, the operation of the FPGA 12 is allowed to continue. However, if the reply sequence RS(RSG1) is not identical to reply sequence RS (RSG2), step 54, the operation of the FPGA 12 is terminated, step 58.

System 10 enables the use of a license to prevent unauthorized users from using the FPGA program in the following manner. Every system 10 includes a CPLD which has a different encryption key $k_0$ in its encryption device and every FPGA 12 has a different decryption key $k_2$ in its decryption device 22. The cryptosystem used in the system 10 must provide, for every pair $(k_0, k_2)$, the key $k_1$ such that the relation $x=k_2^{-1}(k_1(k_0(x_0)))$ holds for every initial state $x_0$. This system enables the key $k_1$ to serve as a license to use a specific FPGA program on a specific device. In this case, license application is performed by software and cannot be bypassed since such a bypass would cause the initial state of the reply sequence generators to be different from each other, resulting in a termination of the operation of the FPGA.

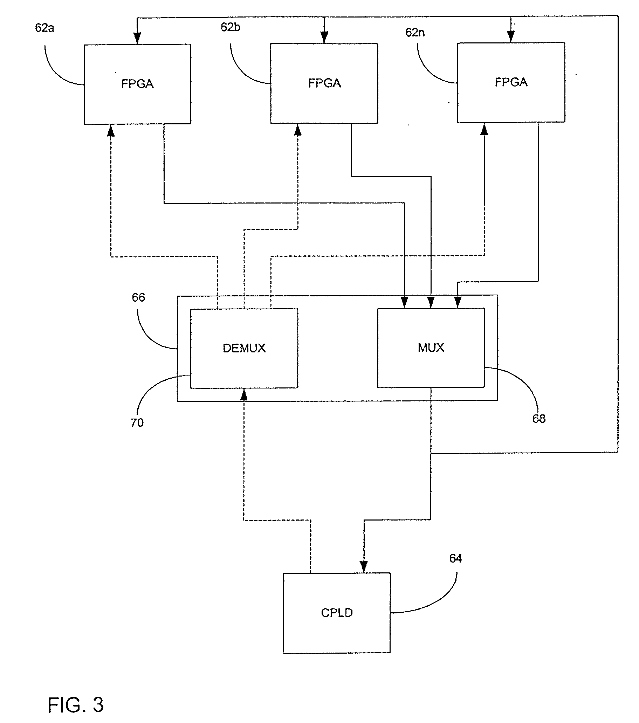

The system of the present invention may also be used in a device which has a plurality of FPGA devices and a single CPLD. Such a device, shown at 60 in Fig. 3, includes a plurality of FPGA devices 62a, 62b, ...62n and one CPLD 64. A time-division multiplexing device 66, including a multiplexer 68 and a demultiplexer 70 is coupled between the FPGA devices and the CPLD 64. After the reply sequence generator of the CPLD 64 and the corresponding reply sequence generators in each of the FPGA devices have been initialized with an initial state generated by the random bit generator of the CPLD as described above, each of the FPGA devices 62a, 62b, ...62n output a partial challenge sequence to multiplexer 68 of time-division multiplexing device 66. The partial challenge sequences from each FPGA device are combined into one complete challenge sequence in multiplexer 68 and transmitted to CPLD 64 and to all FPGA devices 62a, 62b, ...62n. CPLD 64 processes the challenge sequence as described above and outputs the reply sequence to demultiplexer 70 of time-division multiplexing device 66. Demultiplexer 70 transmits the complete reply sequence to all FPGA devices 62a, 62b, ...62n. Each FPGA device then checks the reply sequence received from the demultiplexer 70 against a reply sequence generated by the reply sequence generator of each FPGA device 62a, 62b, ...62n based on the initial state and the complete challenge sequence received from the multiplexer 68 as described above. If the reply sequence received from demultiplexer 70 is identical to the reply sequence generated in each FPGA device, operation of each FPGA program is allowed to continue.

In an alternative embodiment, the CPLD 14 of the system 10 includes a pseudorandom bit generator instead of the reply generator 24 for generating the encrypted reply sequence based solely on the initial state generated by the random bit generator 26, thus eliminating the need for the FPGA 12 to generate the challenge sequence. The remainder of the operation of the system is identical to that described above.

Accordingly, the present invention provides a system which protects programs on a FPGA device from being copied and which enables the owner of the programs to prevent unauthorized use of the programs through the use of licensing. In this system, if a program copied from a FPGA device is programmed into another FPGA, the copied FPGA will not operate without access to the initial state generated in the original CPLD. Furthermore, the owner of the FPGA program can prevent unauthorized use by requiring a user to obtain a license which, as described above is the intermediate key used in the encryption of the initial state. As an added feature, in order to obstruct trial-and-error attacks on the encryption scheme, the failure of the activation protocol is not made evident to the observer since the FPGA program does not report activation failure on any of FPGA outputs. Instead, it may introduce subtle distortions in computation results expected from the FPGA.

The invention may be embodied in other specific forms without departing from the spirit or essential characteristics thereof. The present embodiments are therefore to be considered in respects as illustrative and not restrictive, the scope of the invention being indicated by the appended claims rather than by the foregoing description, and all changes which come within the meaning and range of the equivalency of the claims are therefore intended to be embraced therein.

## Claims

1.  A copy protection system for a field programmable gate array comprising:

    a factory-programmed logic device (CPLD) including an initial state generator, a first sequence generator and an encryption device; and

    a field-programmable gate array device (FPGA) being programmed with a field-programmable gate array program and including a second sequence generator, a third sequence generator, a decryption device and a sequence comparison device, said second sequence generator being a replicate of said first sequence generator;

    wherein said CPLD generates an initial state in said initial state generator, initializes said first sequence generator with said initial state, encrypts said initial state in said encryption device, and transmits said encrypted initial state to said FPGA;

    said FPGA decrypts said encrypted initial state in said decryption device, initializes said second sequence generator with said initial state, generates a challenge sequence with said third sequence generator, transmits said challenge sequence to said first sequence generator and said second sequence generator; and

wherein said first sequence generator generates a first reply sequence based on said initial state and said challenge sequence and transmits said first reply sequence to said sequence comparison device, and said second sequence generator generates a second reply sequence based on said initial state and said challenge sequence and transmits said second reply sequence to said sequence comparison device, which compares said first and second reply sequences and enables operation of said FPGA program when said first and second reply sequences are identical.

2. The system of claim 1, wherein said initial state is encrypted a second time in said encryption device before transmission to said decryption device.

3. The system of claim 1 or claim 2, wherein said first encryption operation is carried out with a first key $k_0$, said second encryption is carried out with a second key $k_1$ and said decryption is carried out with a third key $k_2$ such that:

$$x_0 = k_2^{-1}(k_1(k_0(x_0)));$$

wherein $x_0$ is said initial state.

4. The system of claim 3, wherein said second key $k_1$ operates as a license which enables authorized licensees of said FPGA program to use said FPGA program.

5. A copy protection system for a field programmable gate array comprising:

a factory-programmed logic device (CPLD) including an initial state generator, a first sequence generator and an encryption device; and
a field-programmable gate array device (FPGA) being programmed with a field-programmable gate array program and including a second sequence generator, a decryption device and a sequence comparison device, said second sequence generator being a replicate of said first sequence generator;

wherein said CPLD generates an initial state in said initial state generator, initializes said first sequence generator with said initial state, encrypts said initial state in said encryption device, and transmits said encrypted initial state to said FPGA;

said FPGA decrypts said encrypted initial state in said decryption device, and initializes said second sequence generator with said initial state; and

wherein said first sequence generator generates a first sequence based on said initial state and transmits said first sequence to said sequence comparison device, and said second sequence generator generates a second sequence based on said initial state and transmits said second reply sequence to said sequence comparison device, which compares said first and second sequences and enables operation of said FPGA program when said first and second sequences are identical.

6. The system of claim 5, wherein said FPGA further comprises a third sequence generator which generates a challenge sequence, transmits said challenge sequence to said first sequence generator and said second sequence generator; and
wherein said first sequence generator generates a first reply sequence based on said initial state and said challenge sequence and transmits said first reply sequence to said sequence comparison device, and said second sequence generator generates a second reply sequence based on said initial state and said challenge sequence and transmits said second reply sequence to said sequence comparison device, which compares said first and second reply sequences and enables operation of said FPGA program when said first and second reply sequences are identical.

7. The system according to claim 5 or claim 6, wherein said initial state is encrypted a second time before transmission to said decryption device.

8. The system as claimed in any one of claims 5, 6 or 7, wherein said first encryption operation is carried out with a first key $k_0$, said second encryption is carried out with a second key $k_1$ and said decryption is carried out with a third key $k_2$ such that:

$$x_0 = k_2^{-1}(k_1(k_0(x_0)));$$

wherein $x_0$ is said initial state.

9. The system of claim 8, wherein said second key $k_1$ operates as a license which enables authorized licensees of said FPGA program to use said FPGA program.

10. A method of copy protecting a field-programmable gate array comprising:

A. generating an initial state in a random bit generator of a programmable logic device;

B. inputting said initial state into a first sequence generator of said programmable logic device;

C. encrypting said initial state;

D. transmitting said encrypted initial state from said programmable logic device to said field-programmable gate array;

E. decrypting said initial state in said field-programmable gate array;

F. inputting said initial state into a second sequence generator of said field-programmable gate array;

G. generating a first sequence with said first sequence generator based on said initial state;

H. generating a second sequence in said second sequence generator based on said initial state;

I. comparing said first sequence to said second sequence; and

J. terminating operation of said field-programmable gate array if said first sequence is not identical to said second sequence.

11. The method of claim 10 further comprising:

K. generating a third sequence in a third sequence generator of said field-programmable gate array; and

L. inputting said third sequence into said first sequence generator and said second sequence generator;

wherein said first and second sequences are generated based on both said initial state and said third sequence.

12. The method of claim 10 or claim 11, wherein step C comprises encrypting said initial state with a first key $k_0$.

13. The method as claimed in any one of claims 10, 11 or 12, further comprising encrypting said initial state with a second key $k_1$ after step C.

14. The method as claimed in any one of claims 11, 12 or 13, wherein step E comprises decrypting said initial state with a third key $k_2$, such that:

$$x_0 = k_2^{-1}(k_1(k_0(x_0)));$$

wherein $x_0$ is said initial state.

15. The system as claimed in any one of claims 11-14, wherein said second key $k_1$ operates as a license which enables authorized licensees of said FPGA program to use said FPGA program.

10

13

12

FPGA PROGRAM

DECRYPTION DEVICE

REPLY SEQUENCE GENERATOR (RSG2)

REPLY SEQUENCE COMPARISON DEVICE

CHALLENGE SEQUENCE GENERATOR (CSG)

22

20

18

16

28

26

24

14

ENCRYPTION DEVICE

RANDOM BIT GENERATOR (RBG)

REPLY SEQUENCE GENERATOR (RSG1)

FIG. 1

32

30

INITIAL STATE X0 GENERATED IN RANDOM BIT GENERATOR OF CPLD

34

INITIAL STATE X0 INPUT TO REPLY SEQUENCE GENERATOR RSG1 OF CPLD

36

INITIAL STATE X0 ENCRYPTED IN CPLD WITH KEY K0 TO OBTAIN X1=(K0(X0))

38

ENCRYPTED INITIAL STATE X1 IS ENCRYPTED A SECOND TIME WITH KEY K1 TO OBTAIN X2=K1(K0(X0))

40

STATE X2 IS TRANSMITTED TO FPGA

42

FPGA DECRYPTS X2 TO OBTAIN INITIAL STATE X0 USING KEY K2 TO OBTAIN X0=K2 (K1(K0(X0)))

44

X0 INPUT TO REPLY SEQUENCE GENERATOR RSG2 OF FPGA

46

CHALLENGE SEQUENCE GENERATOR CSG OF FPGA GENERATES A CHALLENGE SEQUENCE

48

CHALLENGE SEQUENCE IS TRANSMITTED TO REPLY SEQUENCE GENERATOR RSG1 OF CPLD AND TO REPLY SEQUENCE GENERATOR RSG2 OF FPGA

50

REPLY SEQUENCE GENERATORS RSG1 AND RSG2 GENERATE REPLY SEQUENCE BASED ON INITIAL STATE X0 AND THE CHALLENGE SEQUENCE

52

REPLY SEQUENCE FROM RSG1 RS(RSG1) IS TRANSMITTED TO FPGA AND COMPARED TO REPLY SEQUENCE GENERATED IN RSG2 RS(RSG2)

54

YES ← RS(RSG1)= RS(RSG2? → NO

FIG. 2

56

CONTINUE OPERATION OF FPGA

58

TERMINATE OPERATION OF FPGA

FIG. 3